# EUROPEAN PATENT APPLICATION

(11) **EP 1 124 346 A1**
(43) Date of publication of application: **16.08.2001**
(21) Application number: 00953544.4
(22) Date of filing: 22.08.2000
(51) Int. Cl.: H04J 13/04, H04B 1/10

(54) **METHOD AND APPARATUS FOR RADIO RECEPTION**

(30) Priority: 24.08.1999 JP 23632299
(71) Applicant: MATSUSHITA ELECTRIC INDUSTRIAL CO., LTD., Kadoma-shi, Osaka 571-8501 (JP)
(72) Inventor: MIYA, Kazuyuki, Kawasaki-shi Kanagawa 215-0021 (JP)
(74) Representative: Grünecker, Kinkeldey, Stockmair & Schwanhäusser Anwaltssozietät
(86) International application number: JP0005598
(87) International publication number: WO0115366

(57) **Abstract**

A received common control channel signal is subjected to predetermined radio reception processing, sent to matched filter 103 and subjected to despreading processing there. Regarding a correlation value obtained by despreading processing, its integrated value is sent to level detection section 104. Level detection section 104 performs level detection processing on the input integrated value. Upon acquiring a comparison result that the integrated value exceeds a predetermined threshold, ON/OFF control section 105 turns ON switches 106, 107a and 107b and performs interference canceller processing on the reception signal.

## Description

### Technical Field

The present invention relates to a radio reception apparatus and radio reception method used in a digital radio communication system.

### Background Art

A CDMA (Code Division Multiple Access) is one of multiple-access system technologies when a plurality of stations simultaneously carries out communications on a same frequency band in mobile communications such as automobile telephones and cellular telephones. Other known technologies include an FDMA (Frequency Division Multiple Access) system, a TDMA (Time Division Multiple Access) system, etc. Compared to these technologies, the CDMA system provides higher frequency utilization efficiency and larger channel capacities to accommodate more users.

In the CDMA system, limits of a channel capacity are determined by interference from other users in the own cell or neighboring cells. Therefore, to increase the channel capacity, interference must be reduced in some way. An example of processing to reduce interference is a canceller.

An interference canceller includes a single user type (SUD: Single User Detection) and multi-user type (MUD: Multi User Detection). The single user type is a system of executing the interference canceller using only spreading codes and reception timing of the own station. A typical example of such SUD is an orthogonal filter that adaptively controls a tap coefficient of a matched filter so as to be orthogonal to the spreading code of an interference signal. The SUD has a simpler configuration and shows higher feasibility than the MUD, but it is difficult to apply the SUD in a multi-path environment where the symbol cycle does not match the cycle of the spreading code, for example, in the case where a long-cycle spreading code such as a scramble code is used. This is because when the scramble code is in place, the influence of mutual correlations caused by multi-paths varies from one symbol to another preventing the coefficients of the orthogonal filter from converging.

On the other hand, the MUD is a system for executing the interference canceller by making a data decision after estimating amplitudes and phases of reception signals of all users based on spreading codes of all users engaged in communications and all reception timing information. This system is free of restrictions by cycles of spreading codes.

As the MUD, a multi-stage interference canceller is proposed ("Channel Estimation Successive Update Type DS-CDMA Coherence Multi-Stage Interference Canceller Using Pilot and Data Symbols", by Sawabashi, Andoh, Higuchi, IEICE RCS 96-100), which generates interference replicas of other users based on reception fading complex envelope and decision data estimated on the receiving side, subtracts these interference replicas from the reception signals and thereby improves an SIR (Signal to Interference Ratio) with respect to subsequent users thus improving the reception characteristics.

In a CDMA system represented by W-CDMA, an interference canceller mounted on a communication terminal (UE: User Equipment) such as a mobile station needs to perform correlation calculations on signals of all users, which increases the hardware scale. Moreover, such an MUD needs to know all spreading codes and transmission timings of targets of the canceller, which increases the amount of communication and load.

On the other hand, as a packet communication according to a CDMA system, there is a method of carrying out communication by time-sharing a common spreading code having a high transmission rate. An example of this is a DSCH (Downlink Shared CHannel). Such a packet communication has a high symbol rate and transmits data with high transmit power, and therefore when viewed from the standpoint of interference, interference per channel is considerably greater than a voice channel.

Furthermore, compared to a channel exchange type of continuous communication, such a packet communication often has an asymmetric amount of transmission between the uplink and downlink, and since a burst signal is used, estimating the arrival direction by only receiving a short-time burst signal requires a system with high-speed convergence performance, which generally makes it difficult for a base station to apply high precision transmission with directivity. This increases a probability that the packet communication will constitute great interference to the entire area to be covered.

### Disclosure of Invention

It is an object of the present invention to provide a radio reception apparatus and radio reception method capable of improving the reception characteristics by canceling interference, and more particularly, by canceling interference caused by high-speed packets on the downlink.

A spreading code used for a common control channel needs to be demodulated, and therefore becomes known to a communication terminal. In a packet communication, too, in the case of the DSCH above, spreading codes used are limited. If this spreading code is already known, it is not necessary to inform other communication terminals of the spreading code.

The present inventor has focused on the above fact and has come up with the present invention by discovering that it is possible to improve the reception characteristics with a small hardware scale by executing an interference canceller only on a specific spreading code.

That is, an essence of the present invention is to detect a reception signal spread/modulated by specific spreading codes from the reception signal and perform interference canceller processing on the detected reception signal.

The specific spreading codes are known as described above or one or several spreading codes are notified through transmission. Even if the spreading codes are not known, it is not necessary to transmit spreading codes of all users as in the case of conventional arts, and therefore notification is easier.

### Brief Description of Drawings

FIG.1 is a block diagram showing a configuration of a radio reception apparatus (communication terminal apparatus) according to Embodiment 1 of the present invention;
FIG.2 is a block diagram showing a channel estimation/replica generation section in the communication terminal apparatus above;
FIG.3 is a drawing to explain timing of level detection by the communication terminal apparatus above;
FIG.4 is a block diagram showing a configuration of a radio reception apparatus (base station apparatus) according to Embodiment 2 of the present invention; and
FIG.5 is a drawing to explain timing of level detection by the base station apparatus above.

### Best Mode for Carrying out the Invention

With reference now to the attached drawings, embodiments of the present invention will be explained in detail below.

### (Embodiment 1)

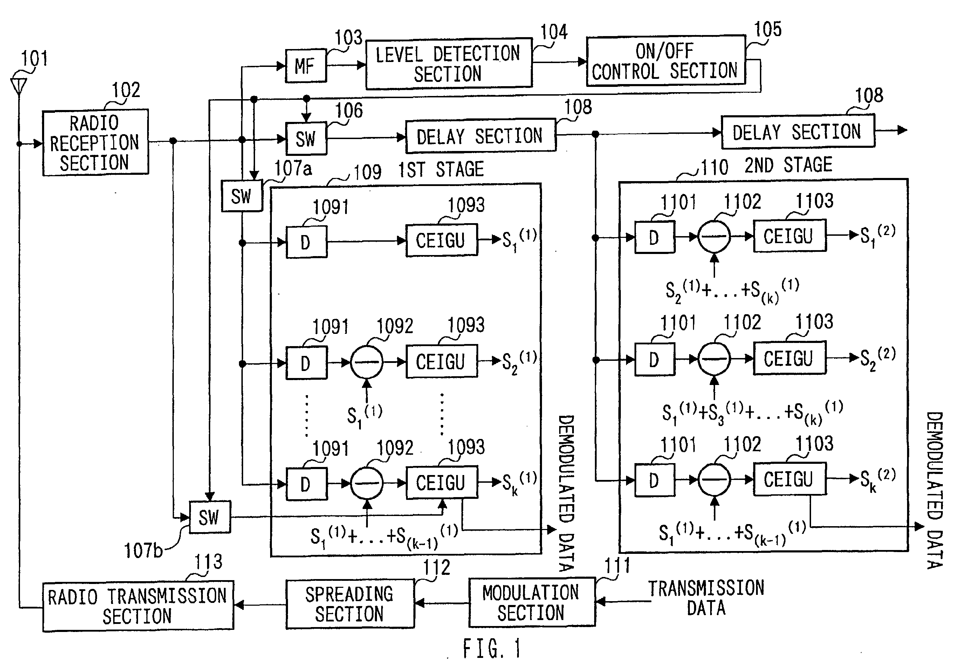

FIG.1 is a block diagram showing a configuration of a radio reception apparatus (communication terminal apparatus) according to Embodiment 1 of the present invention.

A signal transmitted from a base station is received by radio reception section 102 via antenna 101. Radio reception section 102 performs various kinds of processing such as amplification (gain control), down-conversion and A/D conversion on the reception signal. The signal subjected to such processing is sent to matched filter 103, where the signal is subjected to a correlation calculation using the spreading code used for spreading processing on the transmitting side.

The correlation value obtained by the correlation calculation is integrated for a predetermined period and sent to level detection section 104. Level detection section 104 performs level detection on the integrated correlation value. For example, level detection is performed by comparing the integrated correlation value with a threshold.

The result of this level detection is sent to ON/OFF control section 105. ON/OFF control section 105 controls ON/OFF switching of switches (SW) 106, 107a and 107b according to the level result. This ON/OFF switching makes it possible to control execution/non-execution of interference canceller processing.

Interference cancellers 109 and 110 are multi-stage type interference cancellers and constructed of a series of stages each including a delayer and interference canceller unit. Delay section 108 is a memory to delay a reception signal so that processing is carried out by an interference canceller at each stage. At each stage, a replica of a signal which becomes interference is created and interference is removed by subtracting this replica from the reception signal. This allows reception data to be obtained with an SIR (signal to interference ratio) improved.

By the way, the interference canceller shown in FIG.1 is constructed by connecting 1st stage 109 and 2nd stage 110, but the interference canceller can also be constructed by connecting three or more stages.

Interference cancellers 109 and 110 each have a plurality of processing lines and each processing line includes delayers 1091 andl101, subtractors 1092 and 1102 and channel estimation and interference generation units (hereinafter referred to as "CEIGU") 1093 and 1103. By the way, since the 1st stage processing line of 1st stage interference canceller 109 has no signal to be subtracted, no subtractor 1092 is provided.

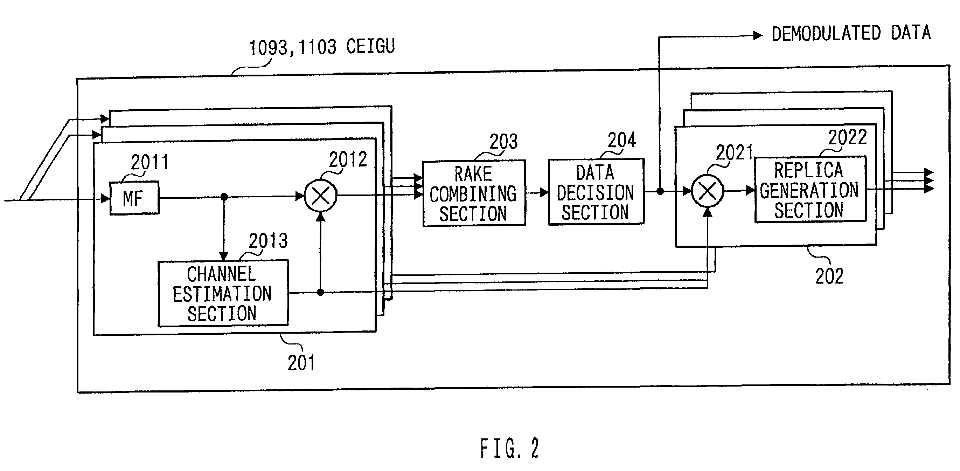

CEIGU 1093 and 1103 have a configuration as shown in FIG.2. The CEIGU includes channel estimation unit 201 that carries out channel estimation, replica generation unit 202 that generates an interference replica using a signal subjected to data decision, RAKE combining section 203 that RAKE-combines the channel-estimated signal and data decision section 204 that carries out a data decision on the RAKE-combined signal.

CEIGU 1093 and 1103 are provided with a plurality of channel estimation units 201 and replica generation units 202 according to the number of their respective multi-path reception delay waves, that is, the number of paths, and therefore CEIGU 1093 and 1103 can generate interference replicas corresponding to each multi-path reception delay wave. The output on the lowermost processing line at each stage is demodulated data.

Channel estimation unit 201 includes matched filter 2011 that performs despreading processing on the received wave, channel estimation section 2013 that carries out channel estimation of a path and multiplier 2012 that multiplies a despreading signal, which is the matched filter output, by a complex conjugate of the channel estimation value estimated by channel estimation section 2013.

Replica generation unit 202 includes multiplier 2021 that multiplies the data symbol after data decision by the channel estimation value obtained by channel estimation section 2013 and replica generation section 2022 that generates an interference replica by applying spreading processing to the data multiplied by the channel estimation value using the spreading code used by matched filter 2011 again.

On the other hand, the transmission data is digital-modulated by modulation section 111 and sent to spreading section 112. Spreading section 112 performs spreading modulation processing on the transmission data using a predetermined spreading code. This spread/modulated signal is sent to radio transmission section 113, where the signal is subjected to various kinds of processing such as amplification (gain control), up-conversion and D/A conversion. The signal subjected to such radio transmission processing is sent from antenna 101.

Then, the operation of the radio reception apparatus (communication terminal apparatus) in the configuration above will be explained.

First, a case where the communication terminal executes the interference canceller on a spreading code used for a common control channel will be explained. The common control channel signal needs to be demodulated by the communication terminal, and therefore is sent from the base station with a relatively high level. Therefore, the common control channel signal can be identified by monitoring the reception level at the communication terminal. Thus, interference canceller processing is performed on this spreading code using the spreading code used for the common control channel as the specific spreading code.

The received common control channel signal (target spreading code) is subjected to predetermined radio reception processing and sent to matched filter 103, where the signal is despread using a known spreading code used for the common control channel. A correlation value resulting from despreading processing is integrated for a predetermined period and the integrated value is sent to level detection section 104.

Level detection section 104 performs level detection processing on the input integrated value. For example, level detection section 104 compares the integrated value with a predetermined threshold and sends the comparison result to ON/OFF control section 105. Thus, it is possible to extract a signal spread/modulated with a specific spreading code from the reception signal by performing level detection in this way.

Upon acquiring a comparison result that the integrated value exceeds the predetermined threshold, ON/OFF control section 105 turns ON switches 106, 107a and 107b and performs interference canceller processing on the reception signal. At this time, switch 107a is switched so that the reception signal is sent to 1st stage interference canceller 109, switch 106 is switched so that the reception signal is sent to 2nd stage interference canceller 110 and switch 107b is switched so that the reception signal is not sent directly to the CEIGU 1093 on the lowermost processing line.

On the other hand, upon acquiring a comparison result that the integrated value falls below the predetermined threshold, ON/OFF control section 105 turns OFF switches 106, 107a and 107b and demodulates the reception signal without performing interference canceller processing. At this time, switch 107a is switched so that the reception signal is not sent to 1st stage interference canceller 109, switch 106 is switched so that the reception signal is not sent to 2nd stage interference canceller 110 and switch 107b is switched so that the reception signal is sent directly to the CEIGU 1093 on the lowermost processing line.

When this ON/OFF control is performed, a delay is generated by decision processing using level detection, and therefore it is necessary to temporarily store the reception signal in memory in the meantime, but since storage processing is indispensable in the MUD processing and this is not a big problem.

When interference canceller processing is performed, the reception signal is input to 1st stage interference canceller and processed on the processing line at each stage. The sequence of stages (sequence from the top stage to bottom stage) is determined in descending order according to the reception level, for example.

On the 1st stage processing line of 1st stage interference canceller 109, the reception signal is sent to CEIGU 1093 via delayer 1091. CEIGU 1093 performs channel estimation on another user channel with the highest level and generates a replica signal of this other user channel using the result of the channel estimation.

More specifically, the signal of the 1st other user channel signal is sent to channel estimation unit 201 of CEIGU 1093 for every delay wave. In channel estimation unit 201, matched filter 2011 performs despreading processing on the 1st other user channel signal and obtains a reception symbol. By the way, the spreading code used for despreading processing, that is, the spreading code of the 1st user channel is known to the communication terminal.

The reception symbol obtained by despreading processing is sent to channel estimation section 2013. Channel estimation section 2013 performs channel estimation of the 1st other user channel using a known signal such as a pilot symbol and obtains a channel estimation value. Then, multiplier 2012 performs coherent detection by multiplying the reception symbol above by a complex conjugate of this channel estimation value. Then, their respective reception symbols are sent to RAKE combining section 203.

RAKE combining section 203 RAKE-combines a reception symbol for every delay wave and sends the RAKE-combined reception symbol to data decision section 204. Data decision section 204 performs data decision on the RAKE-combined reception symbol and obtains a data symbol. On the lowermost processing line at the final stage, the output of data decision section 204 is demodulated data.

The data symbol subjected to data decision is multiplied by a channel estimation value obtained from channel estimation section 2013 of their respective channel estimation units 201 according to the delay wave by multiplier 2021 of replica generation unit 202 separated at timing of each delay wave.

The multiplied symbols are sent to replica generation section 2022 and subjected to re-spreading/modulation processing using the spreading code used by matched filter 2011. The re-spread/modulated signals obtained in this way are combined into an interference replica signal (S1(1)) of the 1st other user channel.

The interference replica signal S1(1) of this 1st other user channel is used on the 2nd processing line of 1st stage interference canceller 109. On the 2nd processing line, the reception signal is sent to subtractor 1092 via delayer 1091. There, the interference replica signal of the 1st other user channel is subtracted from the reception signal. The interference component of the 1st other user channel is removed from the reception signal in this way.

The reception signal stripped of the interference component of this 1st other user channel is sent to CEIGU 1093 and CEIGU 1093 performs processing similar to the processing above to obtain an interference replica signal (S2(1)) of the 2nd other user channel.

The interference replica signals of the 1st and 2nd other user channels are used on the processing lines at and after the 3rd stage of the 1st stage interference canceller 109. On the processing lines at and after the 3rd stage, the reception signal is sent to subtractor 1092 via delayer 1091 in the same way as on the processing line at the 1st and 2nd stages. There, the interference replica signals of the other user channel obtained on the processing lines up to the preceding stage are subtracted from the reception signal. The interference components of the other user channels up to the preceding stage are removed from the reception signal in this way.

Thus, interference replica signals S1(1), S2(1), ... , Sk-1(1) of other user channels are obtained through 1st stage interference canceller 109. The output of CEIGU 1093 on the lowermost-stage processing line is demodulated data. These interference replica signals S1(1), S2(1), ..., Sk-1(1) and demodulated data Sk are used by 2nd stage interference canceller 110.

On the 1st stage processing line of 2nd stage interference canceller 110, the reception signal is sent to subtractor 1102 via delayer 1101. There, interference replica signals S2(1), ..., Sk-1 and demodulated data Sk of other user channels other than the 1st other user channel obtained at the 1st stage are subtracted from the reception signal. In this way, the interference component of other than the 1st other user channel obtained by the 1st stage interference canceller 109 is removed from the reception signal.

The reception signal stripped of the interference component of other than the 1st other user channel obtained by the 1st stage interference canceller 109 is sent to CEIGU 1103, subjected to the same processing as that described above and converted into an interference replica signal S1(2) of the 1st other user channel.

The interference replica signal (S1(2)) of the 1st other user channel is used on the 2nd stage processing line of the 1st stage interference canceller 110. On the 2nd stage processing line, the reception signal is sent to subtractor 1102 via delayer 1101. There, the interference replica signal S1(2) of the 1st other user channel obtained from the 1st stage processing line and the interference replica signals S3(1), ..., Sk(1) of other than the 1st and 2nd other user channels obtained by the 1st stage interference canceller 109 are subtracted from the reception signal. In this way, the interference components of the 1st other user channel at the 2nd stage interference canceller are removed from the reception signal.

The reception signal stripped of the interference components of the 1st other user channel obtained by the 2nd stage interference canceller is sent to CEIGU 1103, subjected to the same processing as that described above and converted into an interference replica signal (S2(2)) of the 2nd other user channel.

Such processing is carried out on each processing line and each stage, and in this way the demodulated data of the desired signal is obtained from CEIGU on the lowermost processing line at each stage.

On the other hand, when ON/OFF control section 105 acquires a comparison result that the integrated value is less than the predetermined threshold and demodulates the reception signal without performing interference canceller processing, then the reception signal is directly input to CEIGU 1093 on the lowermost processing line of 1st stage interference canceller 109, subjected to channel estimation and demodulation processing and converted into demodulated data.

As shown above, the present invention monitors a channel that executes the interference canceller by level detection, that is, monitors a common control channel and detects the presence or absence of a channel that executes the interference canceller (target channel) and performs interference canceller processing only when there is any target channel. That is, the present invention performs ON/OFF control of the interference canceller processing based on the detection result as to the presence or absence of the target channel. This allows interference canceller processing to be performed only on a specific channel (common control channel). Since spreading codes used for the common control channel are known, it is easy to perform interference canceller processing.

Moreover, since interference canceller processing is performed only on specific spreading codes, it is possible to reduce the number of channels k-1 whose interference is to be eliminated. This makes it possible to drastically reduce the hardware scale compared to conventional MUD interference cancellers. Furthermore, even if spreading codes are notified from the base station, only a small amount of communication is required for spreading code notification.

On the other hand, when interference canceller processing is performed in packet communication, the communication terminal monitors a control signal AICH (Acquisition Indication CHannel) signal or TFCI (Transport Format Combination Indicator) signal, etc. sent from the base station before or simultaneously with actual data communication or detects the presence or absence of the packet data signal itself sent with specific spreading codes, detects the arrival of a canceller target signal and thereby controls ON/OFF of the interference canceller processing.

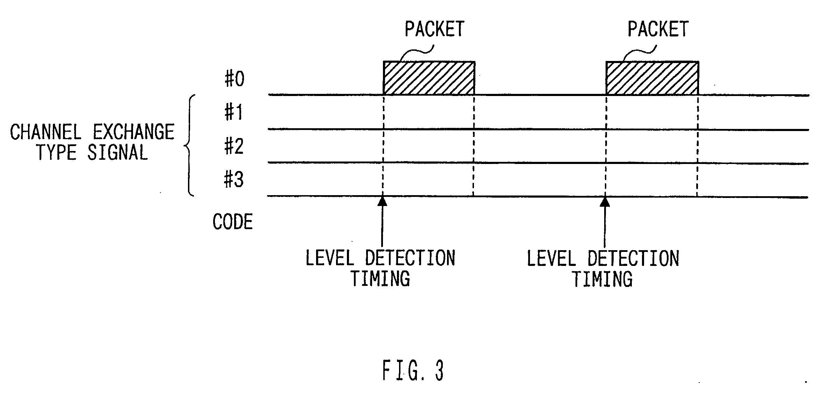

That is, as shown in FIG.3, when a packet signal is communicated with a specific spreading code #0 at specific transmission timing (or reception timing), the arrival of the packet signal is detected from its level at that timing and ON/OFF control of the interference canceller is performed. This makes it possible to perform interference canceller processing even in packet communication in the same way as that shown above. By the way, spreading codes #1 to #3 are spreading codes used for a channel exchange type signal.

The present invention is also applicable when transmission directivity control is performed using an adaptive array antenna or smart antenna. A packet signal sent with specific directivity constitutes considerable interference to a channel exchange type signal (signal communicated through a channel such as a voice signal or high-speed image transmission signal) with identical directivity.

Thus, as shown above, detecting the level of a packet signal using a specific spreading code and controlling ON/OFF of interference canceller processing based on the detection result allows interference canceller processing to be performed only on a packet signal transmitted with specific directivity, which constitutes considerable interference to a channel exchange type signal. As a result, interference with the channel exchange type signal can be reduced.

### (Embodiment 2)

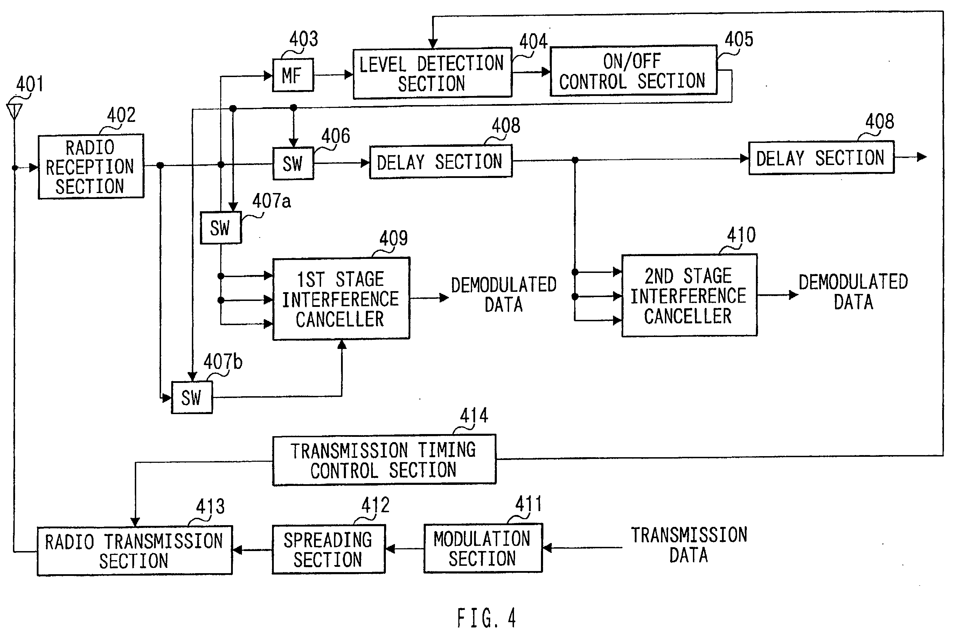

FIG.4 is a block diagram showing a configuration of a radio reception apparatus (base station apparatus) according to Embodiment 2 of the present invention.

A signal transmitted from a communication terminal is received by radio reception section 402 via antenna 401. Radio reception section 402 performs various kinds of processing such as amplification (gain control), down conversion and A/D conversion on the reception signal. The signal subjected to such processing is sent to matched filter 403, where the signal is subjected to a correlation calculation using the spreading code used for spreading processing on the transmitting side.

The correlation value obtained by the correlation calculation is integrated for a predetermined period and sent to level detection section 404. Level detection section 404 performs level detection on the integrated correlation value. For example, level detection is performed by comparing the integrated correlation value with a predetermined threshold.

The result of this level detection is sent to ON/OFF control section 405. ON/OFF control section 405 controls ON/OFF switching of switches (SW) 406, 407a and 407b according to the level result. Through this ON/OFF switching, execution/non-execution of interference canceller processing is controlled.

Interference cancellers 409 and 410 are multi-stage type interference cancellers and constructed of a series of stages each including a delayer and interference canceller unit. Delay section 408 is a memory to delay a reception signal so that interference canceller processing is carried out at each stage. At each stage, a replica of a signal which constitutes interference is created and interference is removed by subtracting this replica from the reception signal. This makes it possible to obtain reception data with an improved SIR (signal to interference ratio).

Timing control section 414 controls timing at which a control signal such as AICH is sent to the communication terminal and timing at which level detection is performed on the reception signal.

On the other hand, the transmission data is digital-modulated by modulation section 411 and sent to spreading section 412. Spreading section 412 performs spreading/modulation processing on the transmission data using a predetermined spreading code. This spread/modulated signal is sent to radio transmission section 413, where the signal is subjected to various kinds of processing such as amplification (gain control), up-conversion and D/A conversion. The signal subjected to such radio transmission processing is sent from antenna 401.

Then, the operation of the radio reception apparatus (base station apparatus) in the configuration above will be explained. Here, a case where ON/OFF of interference canceller processing is controlled in a packet communication will be explained.

The received packet signal (target spreading code) is subjected to predetermined radio reception processing, sent to matched filter 403 and subjected to despreading processing using a known spreading code used in the packet signal there. A correlation value obtained by despreading processing is integrated for a predetermined period and the integrated value is sent to level detection section 404.

Level detection section 404 performs level detection processing on the input integrated value. For example, level detection section 404 compares the integrated value with a predetermined threshold and sends the comparison result to ON/OFF control section 405. In this way, performing level detection makes it possible to extract the signal spread/modulated using a specific spreading code from the reception signal.

Upon acquiring a comparison result that the integrated value exceeds a predetermined threshold, ON/OFF control section 405 turns ON switches 406, 407a and 407b and performs interference canceller processing on the reception signal. At this time, switch 407a is switched so that the reception signal is sent to lst stage interference canceller 409, switch 406 is switched so that the reception signal is sent to 2nd stage interference canceller 410 and switch 407b is switched so that the reception signal is not sent directly to the CEIGU on the lowermost processing line.

On the other hand, upon acquiring a comparison result that the integrated value falls below the predetermined threshold, ON/OFF control section 405 turns OFF switches 406, 407a and 407b and demodulates the reception signal without performing interference canceller processing. At this time, switch 407a is switched so that the reception signal is not sent to 1st stage interference canceller 409, switch 406 is switched so that the reception signal is not sent to 2nd stage interference canceller 410 and switch 407b is switched so that the reception signal is sent directly to the CEIGU of the lowermost processing line.

The interference canceller processing in each interference canceller is the same as the interference canceller processing in Embodiment 1.

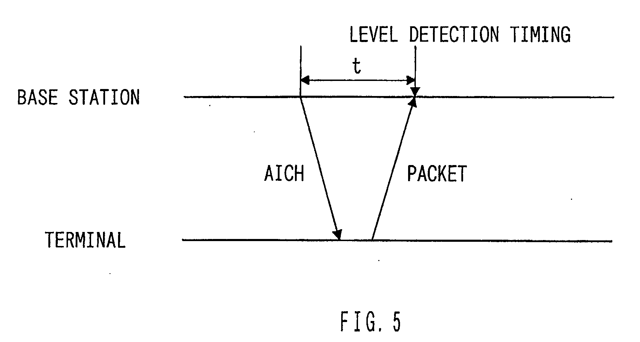

Furthermore, the level detection timing on a packet signal is controlled by timing control section 414. Since a control signal (AICH, etc.) that enables transmission of an uplink packet signal is sent by the base station itself, the packet reception timing can be predicted from that transmission timing. That is, as shown in FIG.5, since time t from the timing of transmitting AICH from the base station to the communication terminal to the timing at which the packet signal arrives at the base station is predictable at the base station, level detection of the packet signal is performed at the timing at which the packet signal arrives at the base station. That is, ON/OFF control of the interference canceller is started when a predetermined time has passed after the AICH transmission timing.

Thus, the present invention monitors the transmission timing of a control signal about a channel that executes the interference canceller through level detection, detects the presence or absence of a channel (target channel) that executes the interference canceller and performs interference canceller processing only when the target channel exists . That is , the present invention performs ON/OFF control of interference canceller processing based on the detection result about the presence or absence of the target channel. In this way, it is possible to perform interference canceller processing only on a specific packet signal. Since a spreading code used for a specific packet signal is notified from the communication terminal or already known, only a small amount of communication is required for notification of the spreading code even if the spreading code is notified from the communication terminal.

Moreover, since interference canceller processing is performed only on a specific spreading code, it is possible to reduce the number of channels k-1 whose interference is to be eliminated. Thus, the hardware scale can be drastically reduced compared to the conventional MUD interference canceller. Furthermore, even if the spreading code is notified from the base station, only a small amount of communication is required for notification of the spreading code.

In a packet communication, the present invention can also be applied to a case where transmission directivity control is performed using an adaptive array antenna or smart antenna as in the case of Embodiment 1. A packet signal sent with specific directivity constitutes considerable interference to a channel exchange type signal (communicated through a channel such as a voice signal or high-speed image transmission signal) with identical directivity.

Therefore, as shown above, by detecting the level of a specific packet signal and performing ON/OFF control of interference canceller processing based on the detection result, it is possible to perform interference canceller processing only on the packet signal sent with specific directivity, which constitutes considerable interference to the channel exchange type signal. As a result, interference with the channel exchange type signal can be reduced.

The radio reception apparatus of the present invention has a configuration including a detection section that detects a reception signal spread/modulated using a specific spreading code from a reception signal and an interference canceller that performs interference canceller processing about the detected reception signal.

The radio reception apparatus of the present invention in the configuration above has a configuration in which the extraction section measures the reception level of a reception signal and extracts a reception signal spread/modulated using a specific spreading code from this measurement result.

According to these configurations, since interference canceller processing is performed only on a specific spreading code, interference canceller processing can be performed with the reduced hardware scale compared to conventional arts. Moreover, only a small amount of communication is required for notification of the spreading code even if the spreading code is notified from the other end of communication. As a result, it is possible to obtain desired reception data with extreme ease and with improved SIR.

The radio reception apparatus of the present invention has a configuration including a reception level measurement section that measures the reception level of a reception signal spread/modulated using a spreading code, a control section that controls execution/non-execution of interference canceller processing according to the reception level and an interference canceller that eliminates the interference component from the reception signal when the interference canceller processing is performed.

The radio reception apparatus of the present invention in the configuration above has a configuration in which when the reception level of the reception signal exceeds a predetermined threshold, interference canceller processing is performed on the reception signal.

According to these configurations, a channel on which the interference canceller is executed is monitored through level detection and interference canceller processing is performed only on a specific channel. Since interference canceller processing is performed only on a specific spreading code, only a small amount of communication is required for notification of the spreading code even if the spreading code is notified from the other end of communication. This allows interference canceller processing to be performed with the reduced hardware scale. As a result, desired reception data can be obtained with improved SIR.

The radio reception apparatus of the present invention in the configuration above has a configuration in which when the reception signal is a packet signal, control of execution/non-execution of interference canceller processing is started at timing at which the packet signal is received.

According to this configuration, interference canceller processing can be performed only on a specific channel on the downlink and desired reception data can be obtained with improved SIR.

The radio reception apparatus of the present invention in the configuration above has a configuration in which when the reception signal is a packet signal, control of execution/non-execution of interference canceller processing is started when a predetermined time has passed after the transmission timing of a control signal sent before the packet signal is sent.

This configuration allows interference canceller processing to be performed only on a specific channel and makes it possible to obtain desired reception data with improved SIR.

The communication terminal apparatus of the present invention is characterized by provision of the radio reception apparatus in the above configuration. Furthermore, the base station apparatus of the present invention is characterized by provision of the radio reception apparatus in the above configuration.

According to these configurations, it is possible to perform interference canceller processing with reduced hardware scale and thereby obtain desired reception data with improved SIR.

The radio reception apparatus of the present invention includes a step of measuring the reception level of a reception signal spread/modulated using a spreading code and a step of performing interference canceller processing on the reception signal when the reception level of the reception signal exceeds a predetermined threshold and eliminating the interference component from the reception signal, and when the reception signal is a packet signal, starts measurement of the reception level of the reception signal at timing at which the packet signal is received.

According to this method, a channel on which the interference canceller is executed is monitored through level detection and interference canceller processing is performed only on a specific channel in this way. This makes it possible to perform interference canceller processing only on a specific channel on the downlink and obtain desired reception data with improved SIR.

The radio reception method of the present invention includes a step of measuring the reception level of a reception signal spread/modulated using a spreading code and a step of performing interference canceller processing on the reception signal when the reception level of the reception signal exceeds a predetermined threshold and eliminating the interference component from the reception signal, and when the reception signal is a packet signal, starts measurement of the reception level of the reception signal when a predetermined time has passed after the transmission timing of a control signal sent before the packet signal is transmitted.

According to this method, a channel on which the interference canceller processing is executed is monitored through level detection and interference canceller processing is performed only on a specific channel. This makes it possible to perform interference canceller processing only on a specific channel on the uplink and obtain desired reception data with improved SIR.

The present invention is not limited to the embodiments described above, but can be implemented with various modifications. There are no particular restrictions on the number of processing line stages in the interference canceller and the number of stages. Furthermore, as the method of extracting a signal spread with a specific spreading code from the reception signal, Embodiments 1 and 2 above describe the method by which the reception level is measured and the signal is extracted based on this measurement result. However, the present invention can also use other methods of extracting a signal spread with a specific spreading code from the reception signal.

As described above, the radio reception apparatus and radio reception method of the present invention perform interference canceller processing only on a specific spreading code, making it possible to perform interference canceller processing with reduced hardware scale. This also allows desired reception data to be obtained with improved SIR.

This application is based on the Japanese Patent Application No.HEI 11-236322 filed on August 24, 1999, entire content of which is expressly incorporated by reference herein.

### Industrial Applicability

The present invention can be applied to a base station apparatus and communication terminal apparatus in a digital radio communication system.

## Claims

1. A radio reception apparatus comprising:
detecting means for detecting a reception signal spread/modulated using a specific spreading code from the reception signal; and
an interference canceller that performs interference canceller processing on the detected reception signal.

2. The radio reception apparatus according to claim 1, wherein the detecting means measures the reception level of the reception signal and extracts the reception signal spread/modulated using a specific spreading code from this measurement result.

3. A radio reception apparatus comprising:
reception level measuring means for measuring the reception level of a reception signal spread/modulated using a spreading code;
controlling means for controlling execution/non-execution of interference canceller processing according to said reception level; and
an interference canceller that eliminates the interference component from said reception signal when said interference canceller processing is performed.

4. The radio reception apparatus according to claim 3, wherein when the reception level of said reception signal exceeds a predetermined threshold, interference canceller processing is performed on said reception signal.

5. The radio reception apparatus according to claim 3, wherein when said reception signal is a packet signal, control of execution/non-execution of said interference canceller processing is started at timing at which said packet signal is received.

6. The radio reception apparatus according to claim 3, wherein when said reception signal is a packet signal, control of execution/non-execution of said interference canceller processing is started when a predetermined time has passed after the transmission timing of a control signal sent before said packet signal is transmitted.

7. A communication terminal apparatus equipped with a radio reception apparatus, said radio reception apparatus comprising:
detecting means for detecting a reception signal spread/modulated using a specific spreading code from the reception signal; and
an interference canceller that performs interference canceller processing on the detected reception signal.

8. A base station apparatus equipped with a radio reception apparatus, said radio reception apparatus comprising:
detecting means for detecting a reception signal spread/modulated using a specific spreading code from the reception signal; and
an interference canceller that performs interference canceller processing on the detected reception signal.

9. A radio reception method comprising the steps of:
measuring the reception level of a reception signal spread/modulated using a spreading code;
performing interference canceller processing on said reception signal when the reception level of said reception signal exceeds a predetermined threshold and eliminating the interference component from said reception signal, wherein when said reception signal is a packet signal, measurement of the reception level of said reception signal is started at timing at which said packet signal is received.

10. A radio reception method comprising the steps of:
measuring the reception level of a reception signal spread/modulated using a spreading code;
performing interference canceller processing on said reception signal when the reception level of said reception signal exceeds a predetermined threshold and eliminating the interference component from said reception signal, wherein when said reception signal is a packet signal, measurement of the reception level of said reception signal is started when a predetermined time has passed after the transmission timing of a control signal sent before said packet signal is transmitted.
